# EUROPEAN PATENT SPECIFICATION

(11) **EP 3 632 218 B1**
(45) Date of publication and mention of the grant of the patent: **29.03.2023**
(21) Application number: 18765152.6
(22) Date of filing: 29.05.2018
(51) Int. Cl.: A23L 7/10, A23L 7/196

(54) **METHOD FOR OBTAINING A RAW SEED WITH A REDUCED COOKING TIME**
PROCEDIMIENTO PARA LA OBTENCIÓN DE UN GRANO CRUDO CON UN TIEMPO DE COCCIÓN REDUCIDO
PROCÉDÉ POUR L'OBTENTION D'UN GRAIN BRUT AYANT UN TEMPS DE CUISSON RÉDUIT

(30) Priority: 31.05.2017 ES 201730748
(43) Date of publication of application: 08.04.2020
(73) Proprietor: Color Productos, S.L., 46021 Valencia (ES)
(72) Inventor: REYNA DOMENECH, Enrique, 46003 Valencia (ES)
(74) Representative: Herrero & Asociados, S.L.
(86) International application number: PCT/ES2018/070386
(87) International publication number: WO 2018/220247

(56) References cited:
- GB-A- 807 084
- GB-A- 903 837
- GB-A- 1 044 968
- US-A- 2 944 904
- US-A- 3 582 352
- US-A- 4 361 593
- US-A- 4 385 074
- US-A- 4 649 055

## Description

### Field of the Invention

The present invention relates generally to the field of food technology. It relates particularly to a method for obtaining a raw grain with a reduced cooking time based on using solutions of food acids.

### Background of the Invention

Cereals or grains are the staple food for the majority of humankind. Wheat, rice and maize are cereals having the highest economic importance, but there are other cereals, such as rye, barley, oats, as well as another type of grains, such as legumes, that serve as food for millions of people and animals.

Although each type of cereal requires a specific treatment, there are some general principles that can be applied. In this sense, cereals go through different stages in a large, and at times complex, chain which starts with harvesting and ends in consumption. This chain known as a post-harvest system basically comprises three separate blocks: the first block ranges from grain harvesting to storage and encompasses all the operations which allow extracting and stabilizing the cereal grain (threshing, winnowing, drying), the second block referred to as primary processing comprises those operations which allow obtaining intermediate products, fundamentally flour, which can be consumed directly by people (cleaning, packaging, milling), the third block or secondary processing are formed by those operations which transform the intermediate products into end products (for example, bread manufacturing) (baking, extrusion, fermentation). The operations included in the secondary processing can be industrial or domestic.

There are several ways of treatments through water and heat on the market for the industrialization of grains in general, and of cereals in particular, for example, rice, maize, and wheat. These grains go through water-only methods or joint waterand-heat methods to which the grains are subjected. These technologies, commonly known to one skilled in the art, include:
- precooking, e.g., for ready-made meals,
- parboiling, steaming, or blanching, through soaking and cooking the grains at 60°C and then drying under pressure,
- hydrating, e.g., for grains intended for making precooked products,
- nixtamalization, e.g., for maize intended for human consumption, or
- milling or grinding, e.g., for cereals for making pastas and flour.

Furthermore, it is increasingly common to find on the market different types of grains to which processing is applied prior to sale thereof for the purpose of improving their characteristics with respect to the conventional grain, such as the reduction of cooking time or the increase in their nutritional quality.

In particular, there is a plethora of research works which seek to obtain a product, such as the case of rice, which can be used as a convenience food that, however, does not lose its quality attributes. The reduction of final cooking time of instant or precooked rice makes it appealing for consumers looking for convenience fast foods that, however, have nutritional quality. For example, in the case of brown rice that is rich in vitamins and minerals, the problem underlying the low consumption thereof is its long cooking time (45-60 minutes), low stability, and unappealing sensory attributes.

There can be found in the state of the art rice-based products having a reduced cooking time, for which they have been previously processed by means of methods incorporating additional steps which follow the conventional parboiling operation (cooking in boiling water), alter the original shape, and/or chemically change the structure of the rice. These include: a) size reduction, b) puffing, or c) extrusion. Examples of the latest chemical processes include: a) enzymatic treatment or b) protein modification.

These methods of the state of the art provide a rice-based product having an altered appearance with respect to the original one as regards its size, texture, shape, color, taste, or palate. In this sense, "size reduction" improves the cooking times by reducing the thickness of the individual rice grains. A reduction in the thickness of the rice reduces the cooking time since the rice grain is completely hydrated quicker (US2733147, US5045328). However, the product obtained by these methods has a non-natural appearance and a different mouthfeel as a result of the altered shape and size.

On the other hand, the methods using a "puffing" step reduce the cooking time by increasing the volume of the rice-based product, decreasing the density thereof. The result is a porous structure that readily rehydrates. Puffing processes include: 1) atmospheric pressure methods which are based on the sudden application of heat to obtain the quick water vaporization required and 2) pressure drop processes comprising the sudden transfer of superheated moisture particles into a space exposed to a lower pressure. The puffing phenomenon is derived from the sudden expansion of water vapor in the interstices of the granule *("*Rice, volume II: Use", Second Edition, edited by Bor S. Luh, page 180*) (*US2438939*;* US4166868*;* US4233327*).* Similarly to the preceding case, the "puffing" method results in a rice-based product with a non-natural appearance and a different mouthfeel as a result of the altered shape, the surface texture, and the size.

The methods comprising "extrusion" reduce the cooking time of the rice forming a substance similar to pasta by extruding a mass of rice-based product. The resulting extruded product is similar to pasta and has an appearance and palate that are significantly different compared to conventional rice.

The described methods have additional drawbacks since all of them require at least one additional step and/or apparatus for processing the rice. The methods which comprise reducing the thickness of the grain, for example, require a separate step of compressing the grains.

Other methods for reducing the cooking times of rice comprise subjecting parboiled grains to treatment with a measured quantity of a solution containing water and an enzyme (US4810506). In this type of method, the parboiled grain is preferably subjected to a compression process while it is still hot by passing the grain between rollers prior to treatment with the enzyme-containing solution (ES2208919T3).

Patent document US3879566 relates to a process for preparing a quick-cooking rice which modifies the protein component of the rice so that water will be more available for imbibition and for modifying the starch component of the rice, increasing its hydrophilic characteristics. In this case, the rice grains are not subjected to mechanical action for modifying their physical structure. Instead, the molecular or internal structure modification of the rice grain chemical components is performed by the use of chemicals and heat treatment to facilitate penetration of the water into the rice grains during preparation of the quick-cooking rice and also during its final cooking to a palatable condition. This chemical alteration of the rice can result in a strange taste or color in the cooked rice-based product.

Healthy convenience products have also been developed in recent years by means of using the HHP technology to successfully reduce those cooking times and to try to increase the quality attributes. However, in products treated by means of HHP, the sensorial quality fails to reach the sensorial quality of conventionally cooked rice, and they also pose problems in terms of rehydration time (Prasert and Suwannapor "Optimization of instant jasmine rice process and its physicochemical properties". 2009. J Food Eng. 95:54-61*).* Furthermore, the high cost derived from the implementation of HHP equipment leads to a high market price of the products compared to those processed using conventional methods such as heat treatment.

GB 1 044 968 A and US 4 361 593 A relate to methods for preparing dry quick cooking rice.

Consequently, it would be desirable to produce a quick-cooking rice with a natural appearance and taste, basically without altering the size and/or shape of the individual rice grains, as well as to obtain a method for manufacturing same which does not significantly increase the quick-cooking rice manufacturing cost and/or complexity.

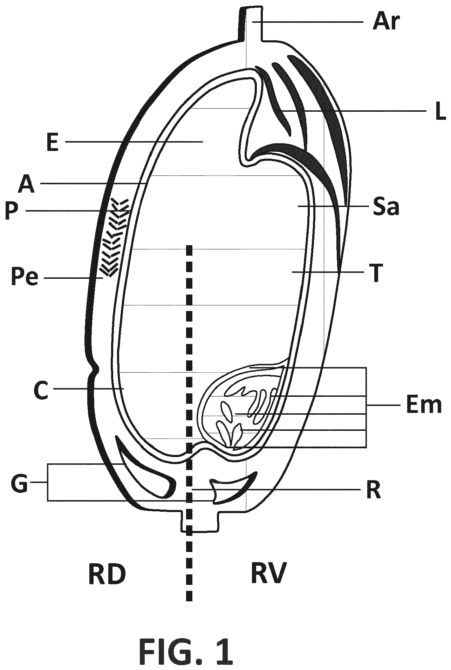

Most plants from which cereals, and even seeds and legumes (foodstuffs for human and animal consumption), are obtained share a similar, and in many cases common, morphology. For example, in rice and wheat, the physical structure is divided into two parts: the first part, i.e., the ventral region, where the germ is located, and the second part, i.e., the dorsal region (see Figure 1).

Surprisingly, the author of the present invention has discovered the action that food acid produces in natural raw grains and the fact that a specific and precise settling for each case significantly improves the cooking time of the grain at hand, without compromising subsequent preservation and proper cooking.

In particular, the action of the acid takes place in the endosperm of the grain, such that the food acids that are applied come together and act on its structure.

Based on this discovery and on the needs of the state of the art, the author of the present invention has developed a new simple and cost-effective method for naturally reducing the length of cooking time of cereal grains, legume grains, and grains of other types. In said method, the grains, starting from their original raw state, are subjected to a settling stage in an aqueous solution of food acids, obtained from natural or synthetic ingredients with a pH comprised between 0.1 and 7, for a specific time for each type of grain. Surprisingly, the product obtained is a grain with a reduced cooking time which has intact organoleptic characteristics.

Therefore, the grain obtained is not a precooked, hydrated, parboiled, steamed, or blanched grain as a grain that is raw (dry or wet, depending on their purpose) and innocuous before cooking by the end consumer is obtained.

The present invention therefore provides a simple and cost-effective method for obtaining an already treated raw grain which substantially keeps its original aroma and taste characteristics. The obtained product can be used in its natural dry state (for storage or as animal feed) or natural wet state (for immediate use), and the subsequent cooking thereof intended for animal and human consumption.

### Brief Description of the Drawings

Figure 1 shows the physical structure of grain A. Dorsal region: (E) Endosperm; (A) Aleurone; (P) Palea; (C) Nuclear layer; (G) Glumes; B. Ventral region: (Ar) Brush; (L) Lemma; (Sa) Subaleurone; (T) Testa; (Em) Embryo; (R) Rachilla.
Figure 2 shows a graph of the reduction of cooking time (minutes) of Basmati rice (200 g) with respect to the settling time (hours) in a 40% acidic lemon solution with a pH of 2.2
Figure 3 shows a graph of the reduction of cooking time (minutes) of round-grain rice (200 g) with respect to the settling time (hours) in a 80% acidic tomato solution with a pH of 4.3.
Figure 4 shows a graph of the reduction of cooking time (minutes) of yellow maize (200 g) for animal consumption with respect to the settling time (hours) in a 60% acidic tomato solution with a pH of 4.3.
Figure 5 shows a graph of the reduction of cooking time (minutes) of spelt wheat (200 g) with respect to the settling time (hours) in a 40% acidic tomato solution with a pH of 4.3.

### Detailed Description of the Invention

Based on the needs of the state of the art in relation to obtaining grain-based convenience foods that, however, maintain their quality attributes, the present invention provides a simple, quick, and cost-effective method for obtaining grains in raw state with a reduced cooking time.

Therefore, in a main aspect of the invention a method for obtaining a raw grain with a reduced cooking time is contemplated, in which, before said cooking, the raw grain is subjected to a settling stage with a solution of a food acid, in an amount specific for and suited to each type of grain with a pH comprised between 2.1 and 4.9.

For the purposes of the present invention, a raw grain is understood to be the grain which, after gathering or harvesting, post-harvesting, and primary processing, is not subjected to any subsequent secondary processing treatment such as baking, extrusion, fermentation, etc, to modify its natural state.

The settling stage is carried out at room temperature.

In relation to the cooking time, in the present invention the grain is considered cooked when it has not visibly ruptured and the heart (center of the endosperm) is cooked without drying out or becoming hard. It is not possible to immediately measure its hardness, plasticity, creaminess given that it immediately and constantly experiences state changes upon removal from the heat and moisture source.

Based on its common structure, the food acid acts on all type of grains, so the method of the present invention is applicable to all type of cereal grains (for use as human food and animal feed). In the preferred embodiments, the grain is any type of cereal according to the recognized international measurements, varieties, and types (*Guides to Rice, Maize, and Cereals accepted for sale by the FAO. CODEX STAN 198-1995;* *http:*//*www.fao.org*/*fao-who-codexalimentarius*/*standards*/*en*/*),* more preferably rice, maize, or wheat.

During the settling time, the food acid applied to the raw grains for a specific and suitable time in each case penetrates the grain and modifies it, being taken in through the endosperm.

In the particular embodiments of the method of the invention, after the settling stage, the grain is subjected to a stage of washing with water. This stage is optional, where it is applied on a case-by-case basis only for the purpose of cleaning the acid remaining on the outside, without having any influence on the moisture already contained therein, and without modifying the result of the acid on the grain at hand.

The grain, washed or not washed after the settling time, is subjected to a final drying stage before packaging, in which the grain returns to its initial raw state.

Drying can be carried out naturally at a temperature comprised between 15°C and 40°C.

It is also possible to carry out the drying stage by means of heat treatment at a temperature greater than or equal to 15°C and less than 60°C. For example, the use of a turbo generator for generating uniform heat or a turbo heater for heating at a temperature less than the temperature rightfully considered as cooking (60°C) is contemplated.

The food acid used in the method of the present invention is a natural acid or an artificial (or synthetic) acid. The use of different combinations of two or more natural and synthetic acids is not encompassed by the claimed subject matter.

For the purposes of the present invention, an artificial or synthetic acid refers to that acid which is obtained by industrial methods and recreates the composition and properties of a natural acid.

The different types of natural acids preferably contemplated are listed below:
Natural citric acid comprised in citrus fruits (lemons, oranges, mandarin oranges, pomelos, and limes have particularly high concentrations of citric acid by weight of up to 8%), berries, including blueberry, strawberries, raspberries, blackcurrants, and cranberries, pineapple, cherries, vegetables, tomatoes, certain varieties of peppers, artichokes, and certain varieties of lettuce.

Natural malic acid comprised in fruits and vegetables with an acidic taste such as grapes, apples, green apples, cherries, apricots, cranberries, peaches, rhubarb, plums, tomatoes, pears, pineapple, blackcurrants, and raspberries, as well as in quince paste, hibiscus tea, apple vinegar, and cider vinegar.

Natural ascorbic acid comprised in citrus fruits (such as oranges, lemons, and grapes which contain a lot of vitamin C in their mature state directly after harvesting, as well as acerola cherry), vegetables (green cabbage, camu camu), and green tea.

Natural acetic acid comprised in vinegar (vinegar contains a concentration of acetic acid in water ranging from 3% to 5%. Natural vinegars also contain small amounts of tartaric acid and citric acid).

Natural folic acid comprised in vegetables having a deep green color: spinach, broccoli, chards, green asparagus, lettuce, wild cabbage, turnip greens, mustard greens, etc. Natural folic acid is also comprised in citrus fruits (papaya, orange, strawberries, raspberries, etc), legumes (particularly soybean, as well as beans; lentils, chickpeas, kidney beans, broad beans, snow peas, peas, green beans), whole grains, milk, vegetables: avocadoes, okra, Brussels sprouts, cauliflower, beet, celery, carrots, pumpkin; seeds; pumpkin seeds, sesame seeds, sunflower seeds, or linseeds, walnuts, peanuts, almonds.

Natural oxalic acid comprised in products of plant origin; spinach, beet, chard, cocoa powder, pepper, raspberry, pumpkin, celery, parsley, leek, wheat germ, dried fruits and nuts.

Natural tartaric acid comprised in fruits; grapes, cranberries, bananas.

In the preferred embodiments, acids comprised in natural tomatoes in any of the forms thereof are contemplated. Tomatoes contain different types of acids, but two of them represent a significant percentage of the entire content: citric acid (the most abundant) and malic acid (about half the amount of citric acid). Tomatoes also contain another essential acid, i.e., ascorbic acid (vitamin C).

In the preferred embodiments of the method of the invention, the food acid comprises a predominant proportion of a natural acid selected from citric acid, malic acid, ascorbic acid, acetic acid, folic acid, oxalic acid, and tartaric acid.

In cases in which a natural food acid is used, the settling stage has a duration comprised in an interval between 1 and 48 hours.

When the food acid is artificial (or synthetic) the settling stage has a duration comprised in an interval between 1 and 168 hours.

In a particular embodiment, the acidity of the food acid can be reduced with water before the settling stage.

The method of the invention ends in a grain that is raw (dry) and innocuous before cooking by the end consumer. In fact, even cooking has even perfected with the method of the present invention given that:
a) the method does not use only water, but rather the proper mixing of the grain with food acid for the temporary settling thereof. In fact, the inventor has found through experiments that settling in water alone fails to achieve a reduction in cooking time such as that achieved with the method of the invention with the effect of the acid. Furthermore, it has been found through experiments that overhydration (with water) causes a behavior that is not typical for future storage and subsequent cooking according to the different type of grain.
b) The time for cooking the grain starting from the already treated raw state is specifically reduced, where said cooking can be performed by anyone without him/her having to be skilled at doing same. This is clearly shown, for example, in the case of rice, but it is also applicable to any type of grain, given the similarity of their physical structure and physiochemical reaction to acid treatment.
c) Furthermore, the method of the present invention maintains the natural aroma and taste characteristics of the grain, where the grain can nevertheless be subjected to different organoleptic variations through the acid used. The addition of specific vitamins, minerals, and amino acids in accordance with the legislation of the country in which the product is sold is therefore also contemplated.

The grain that is obtained, is dry and can be stored or used as animal feed and is not encompassed by the claimed subject matter. A food product comprising in its composition the grain obtained according to the method of the present invention is contemplated but not encompassed by the claimed subject matter.

The product thus obtained is packaged for its final consumption. Said packaging can be a single (domestic) packaging for consumers who want to cook any grain in a considerably reduced time, *in situ* or at home, or multiple (professional or industrial) packaging, such as, for example, for industrial companies that treat, package, and sell grains and cereals for human consumption in bars, restaurants, or fast-food establishments, or for animal consumption.

The method of the present invention allows reducing the cooking time of the grain without substantially disrupting its essence so that it can be cooked alone or in combination with other main ingredients: meat, fish, vegetables, or fruits. Furthermore, this method allows the perfect dry preservation of the grain, complying with the properties and international standards for storage, selling, and industrials-scale distribution.

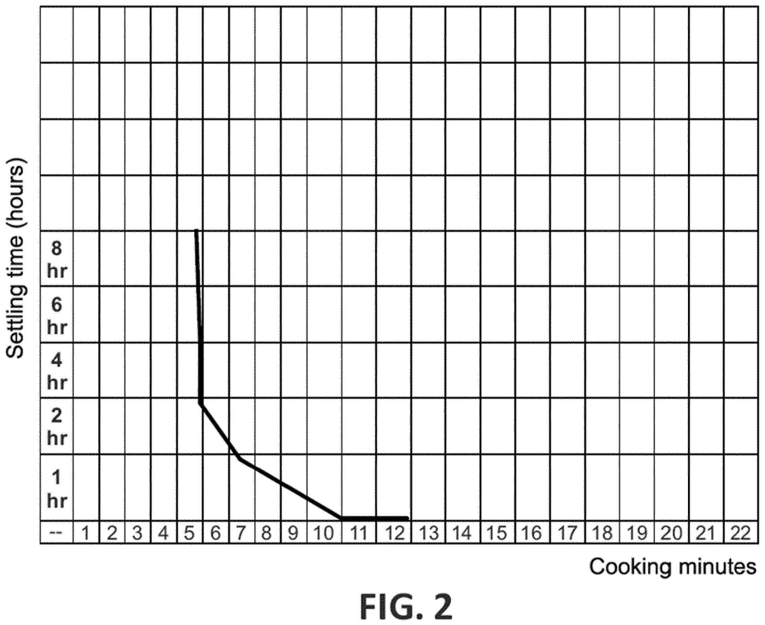

The present invention provides the following advantages:
a) Energy savings. As demonstrated in the graphs that are provided (Figures 2 to 5), the reduction in the use of electric energy is exceptional since in most cases the cooking time is reduced by more than half, reaching a quarter in some cases. This entails an excellent economical advantage in utilizing the sector at an industrial level (e.g., in factories), commercial consumption level (e.g., in restaurants), and domestic consumption level (e.g., at homes).
b) Savings in water consumption. To cook the grains, a large amount of water is usually used to achieve, with the mixing thereof based on heat, the proper cooking of the different types of grains. With the present invention, water usage is considerably reduced. That is particularly advantageous in the general situation of saving potable water in the industrialized world and particularly in the world under industrialization, e.g., in those underdeveloped or developing countries that need to moderate water usage. The method of the invention allows generating more sustainable cultivation practices, as a result of water, time, and energy savings, which allows the potable water to be reserved and used for cooking grains intended for human nutrition.
c) Help in improving climate change. The net reduction in the use of green or polluting energy and water used for cooking the grains helps in the fight against climate change not only at the level of cultivation practices, but also at the level of drying, cooking, and washing at the industrial or domestic level.

### Examples

The instruments used in the test were:
- Precision kitchen scale.
- pH-meter for the simultaneous measurement of pH and temperature.
- Moisture measuring scale.
- Turbo heater-dryer.
- Professional stopwatch.

### Step 1: Mixing the grain with the food acid

The similarity and rightfulness of the percentage of moisture in the products were assured despite the different starting materials, food packaging dates, environmental temperature and humidity, so that they could not significantly affect the tests.

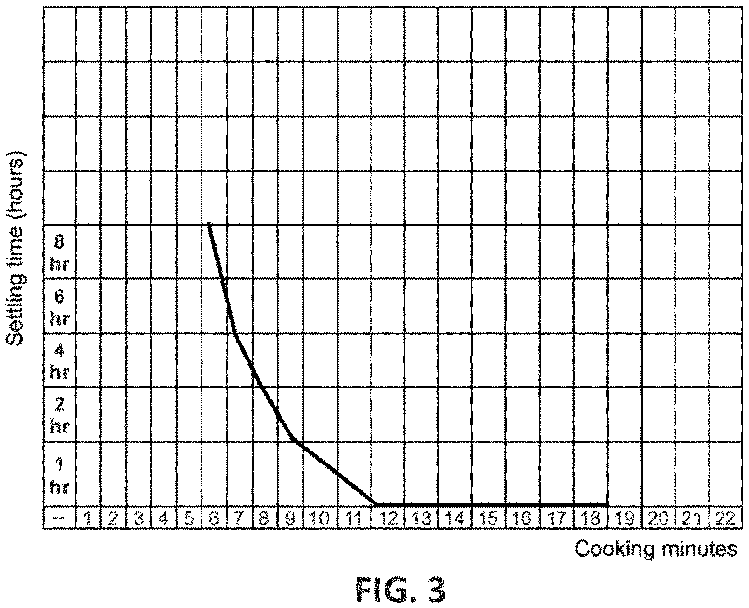

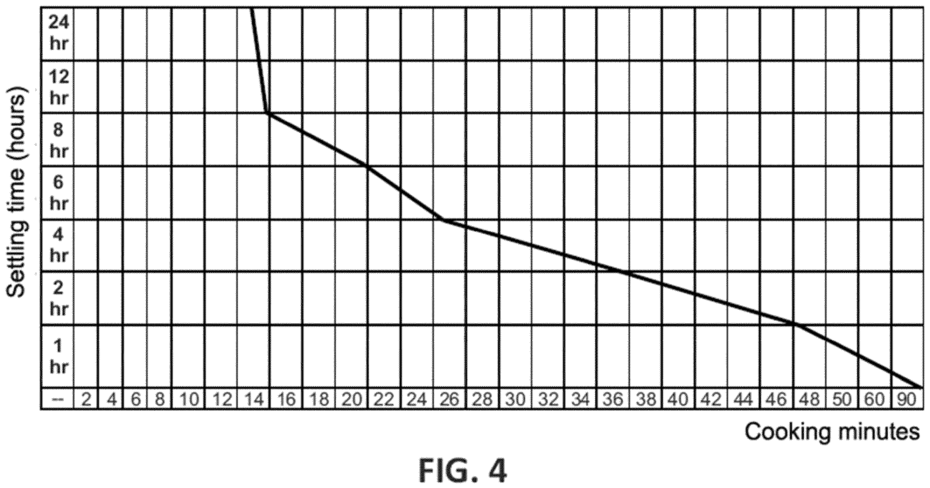

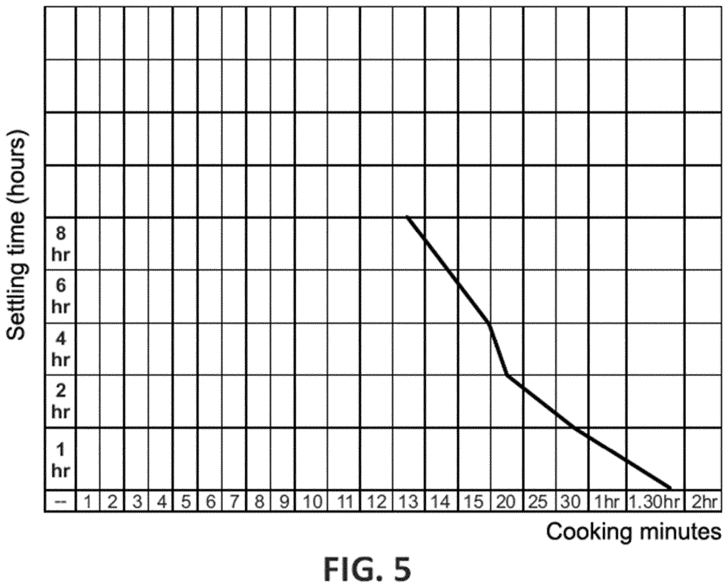

The following tests were conducted:
- Test 1 (Figure 2): 200 g of Basmati rice with an aqueous solution of 40% lemon food acid with a pH of 2.2.
- Test 2 (Figure 3): 200 g of round-grain rice with an aqueous solution of 80% crushed tomato food acid with a pH of 4.3.
- Test 3 (Figure 4): 200 g of yellow maize with an aqueous solution of 80% crushed tomato food acid with a pH of 4.3.
- Test 4 (Figure 5): 200 g of spelt wheat with an aqueous solution of 40% crushed tomato food acid and a pH of 4.3.

Step 2: Settling of the grain in the food acid: the grain was left to settle in accordance with the timestamps shown in Figures 2 to 5.

Step 3: Washing the grain. Washing was performed with potable water with a suitable flow rate to remove the acid remaining on the outside; this action, however, is only for the purpose of rinsing same so as to obtain a proper appearance in cooking, without having any influence on the moisture already contained therein, and without increasing the effect of the acid on the grain at hand.

Step 4: Natural drying at room temperature (average temperature of 21.5°C) was applied. There was also applied as a second alternative a turbo generator for generating uniform heat or a turbo heater with a temperature that is always less than 60°C, and with the grains expanded homogeneously for the suitable time, depending on the type of grain to be dried. Dry grains which as if have returned to their original or initial state and which have no possibility of capturing microorganisms or even germination were obtained. To that end, their rightful degree of moisture allowed for sale in dry state was noted.

Step 5: Verifying the reduction of cooking time. This verification was performed based on whole rice, maize, or wheat grains that were dried naturally or with the turbo heater at temperature less than that considered as cooking. The grains were then precipitated in boiling water with a water temperature of 96°C to 99°C during cooking, and an environmental humidity of 57%, controlling the different time intervals specified in the tables (Figures 2 to 5), and with the different types of grains, obtaining a foodstuff of perfect quality at the commercial and industrial level.

The reduction of cooking time in the different types of tested grains can be verified in Figures 2 to 5. For example, Basmati rice takes an average of 12 to 13 minutes to cook according to the commercial version thereof. It can be seen in Figure 2 how, after an 8-hour settling in the food acid obtained from crushed tomatoes, the time was reduced to 5 minutes.

### Step 6:

Industrial packaging was performed once the establish quality controls were approved. Once drying has been achieved either naturally at room temperature or through suitable turbo heaters, the grain reached the suitable moisture legislated for sale. In all the conducted tests, the moisture of the grains must be less than 15%-20% of moisture according to the FAO criteria for cereal sale worldwide.

## Claims

1. Method for obtaining a raw grain with a reduced cooking time, **characterized in that**, before said cooking, the raw grain is subjected to a settling stage in an aqueous solution of a natural or synthetic food acid, with a pH comprised between 2.1 and 4.9, wherein the settling stage is carried out at room temperature, during an interval between 1 hour to 48 hours, when a natural food acid is used, and an interval between 1 hour to 168 hours, when a synthetic food acid is used, and wherein, after the settling stage the grain is subjected to a final drying stage, in which the grain returns to its initial raw state, wherein the drying stage is carried out by means of heat treatment at a temperature between 15°C and a value less than 60°C or naturally at a temperature comprised between 15°C and 40°C.

2. Method according to claim 1, **characterized in that** it comprises a grain washing stage after the settling stage and before the drying stage.

3. Method according to any of the preceding claims, **characterized in that** the grain is cereal.

4. Method according to claim 3, **characterized in that** the cereal is selected from rice, maize and wheat.

5. Method according to any of the preceding claims, **characterized in that** the food acid comprises a predominant proportion of a natural acid selected from citric acid, malic acid, ascorbic acid, acetic acid, folic acid, oxalic acid, tartaric acid or combinations thereof.

6. Method according to any of the preceding claims, **characterized in that** the acidity of the food acid is reduced with water before the settling stage.

## Patentansprüche

1. Verfahren zum Erhalten eines rohen Samens mit einer reduzierten Kochzeit, **dadurch gekennzeichnet, dass** der rohe Samen vor dem Kochen einer Absetzphase in einer wässrigen Lösung einer natürlichen oder synthetischen Lebensmittelsäure mit einem pH-Wert zwischen 2,1 und 4,9 unterzogen wird, wobei die Absetzphase bei Raumtemperatur während eines Intervalls zwischen 1 Stunde und 48 Stunden durchgeführt wird, wenn eine natürliche Lebensmittelsäure verwendet wird, und während eines Intervalls zwischen 1 Stunde und 168 Stunden, wenn eine synthetische Lebensmittelsäure verwendet wird, und wobei nach der Absetzphase der Samen einer abschließenden Trocknungsphase unterzogen wird, in der der Samen in seinen ursprünglichen Rohzustand zurückkehrt, wobei die Trocknungsphase mittels einer Wärmebehandlung bei einer Temperatur zwischen 15°C und einem Wert von weniger als 60°C oder natürlich bei einer Temperatur zwischen 15°C und 40°C durchgeführt wird.

2. Verfahren nach Anspruch 1, **dadurch gekennzeichnet, dass** es nach der Absetzphase und vor der Trocknungsphase eine Samenwaschphase umfasst.

3. Verfahren nach einem der vorhergehenden Ansprüche, **dadurch gekennzeichnet, dass** es sich bei dem Samen um Getreide handelt.

4. Verfahren nach Anspruch 3, **dadurch gekennzeichnet, dass** das Getreide aus Reis, Mais und Weizen ausgewählt wird.

5. Verfahren nach einem der vorhergehenden Ansprüche, **dadurch gekennzeichnet, dass** die
Lebensmittelsäure einen überwiegenden Anteil einer natürlichen Säure, ausgewählt aus Zitronensäure, Apfelsäure, Ascorbinsäure, Essigsäure, Folsäure, Oxalsäure, Weinsäure oder Kombinationen davon, umfasst.

6. Verfahren nach einem der vorhergehenden Ansprüche, **dadurch gekennzeichnet, dass** der Säuregehalt der Lebensmittelsäure vor der Absetzphase mit Wasser reduziert wird.

## Revendications

1. Procédé destiné à l'obtention d'un grain grossier avec un temps de cuisson réduit, **caractérisé en ce que**, avant ladite cuisson, le grain grossier est soumis à une étape de précipitation dans une solution aqueuse d'un acide alimentaire naturel ou synthétique, dont le pH est compris entre 2,1 et 4,9 ; dans lequel l'étape de précipitation est mise en oeuvre à la température ambiante au cours d'un laps de temps entre 1 heure et 48 heures lorsqu'on utilise un acide alimentaire naturel et au cours d'un laps de temps entre 1 heure et 168 heures lorsqu'on utilise un acide alimentaire synthétique ; et dans lequel, après l'étape de précipitation, le grain est soumis à une étape de séchage finale dans laquelle le grain retourne à son état grossier initial ; dans lequel l'étape de séchage est mise en oeuvre au moyen d'un traitement thermique à une température entre 15° C et une valeur inférieure à 60° C ou de manière naturelle à une température comprise entre 15° C et 40 °C.

2. Procédé selon la revendication 1, **caractérisé en ce qu'**il comprend une étape de lavage du grain après l'étape de précipitation et avant l'étape de séchage.

3. Procédé selon l'une quelconque des revendications précédentes, **caractérisé en ce que** le grain est une céréale.

4. Procédé selon la revendication 3, **caractérisé en ce que** la céréale est choisie parmi le riz, le maïs et le blé.

5. Procédé selon l'une quelconque des revendications précédentes, **caractérisé en ce que** l'acide alimentaire comprend une proportion prédominante d'un acide naturel choisi parmi l'acide citrique, l'acide malique, l'acide ascorbique, l'acide acétique, l'acide folique, l'acide oxalique, l'acide tartrique ou leurs combinaisons.

6. Procédé selon l'une quelconque des revendications précédentes, **caractérisé en ce que** l'acidité de l'acide alimentaire est réduite avec de l'eau avant l'étape de précipitation.
